# EUROPEAN PATENT SPECIFICATION

(11) **EP 0 657 319 B1**
(45) Date of publication and mention of the grant of the patent: **11.03.1998**
(21) Application number: 94119313.8
(22) Date of filing: 07.12.1994
(51) Int. Cl.: B60K 26/02, G05G 1/14

(54) **Accelerator pedal arrangement**
Fahrpedalanordnung
Agencement de pédale d'accélerateur

(30) Priority: 09.12.1993 JP 308911/93; 24.12.1993 JP 326730/93
(43) Date of publication of application: 14.06.1995
(73) Proprietor: NISSAN MOTOR CO., LTD., Yokohama City (JP)
(72) Inventor: Isizuki, Masaharu, Zama City, Kanagawa Pref. (JP); Sirahama, Katunori, Ome City, Tokyo (JP); Mizuma, Hiroyuki, Hadano City, Kanagawa Pref. (JP); Kawahara, Sadahiro, Ebina City, Kanagawa Pref. (JP)
(74) Representative: Grünecker, Kinkeldey, Stockmair & Schwanhäusser Anwaltssozietät

(56) References cited:
- WO-A-91/04165
- DE-A- 4 300 096
- US-A- 1 330 986

## Description

### BACKGROUND OF THE INVENTION

The present invention relates to an electrically controlled accelerator pedal arrangement for a vehicle.

Accelerator pedal arrangements for a vehicle are generally known and includes a mechanically controlled type and an electrically controlled type.

One example of the electrically controlled accelerator pedal arrangements referred to in the preamble of claim 1 is disclosed in Japanese Utility Model Application Second Publication No. 5-7620. The prior art arrangement includes a stationary member, a shaft which has an axis and is supported by the stationary member for rotation about the axis. An accelerator pedal is connected to the shaft for unitary rotation therewith about the axis. A return spring biases the accelerator pedal in a rotational direction toward a released position. A brake operative to resist rotational movement of the accelerator pedal is provided. The brake includes friction pads attached to the stationary member, a slide plate which is linked to the accelerator pedal and engages the friction pads, and a spring biasing the slide plate in frictional engagement with the friction pads.

There is a demand for an electrically controlled accelerator pedal arrangement in which the accelerator pedal can be held at a desirable position by a reduced depressing force applied thereto against a biasing force of the return spring.

An object of the present invention is to provide an improved operating performance of the electrically controlled accelerator pedal arrangements during the movement of the accelerator pedal to the released position.

Another object of the present invention is to provide a simplified structure of the electrically controlled accelerator pedal arrangement, thereby serving for easy assembly and a reduction in size.

### SUMMARY OF THE INVENTION

According to one aspect of the present invention, there is provided an accelerator pedal arrangement comprising:
a stationary member;
a shaft having an axis, the shaft being supported by the stationary member for rotation about the axis;
an accelerator pedal connected to the shaft for unitary rotation therewith about the axis;
a return spring (56) biasing the accelerator pedal in a first rotational direction toward a released position; and
a brake operative to resist rotational movement of the accelerator pedal;
**CHARACTERIZED IN THAT** the brake is in the form of a one-way brake which is operative to resist movement of the accelerator pedal in the first rotational direction, but allowing free movement of the accelerator pedal in the opposite second rotational direction against the return spring.

### BRIEF DESCRIPTION OF THE DRAWINGS

Fig. 1 is a front elevation of a first embodiment of an electrically controlled accelerator pedal arrangement according to the present invention;
Fig. 2 is a side view of the accelerator pedal arrangement of Fig. 1;
Fig. 3 is an enlarged section of one end of the shaft, showing a friction disk;
Fig. 4 is a fragmentary side view, partially broken away, of a one-way clutch;
Fig. 5 is a graph showing a relation between a stroke of the accelerator pedal and a depression force applied to the accelerator pedal;
Fig. 6 is a similar view to Fig. 3 but showing a modified friction pad;
Fig. 7 is a front elevation of a second embodiment of the electrically controlled accelerator pedal arrangement according to the present invention;
Fig. 8 is a side view of the accelerator pedal arrangement of Fig. 7;
Fig. 9 is a fragmentary side view of a one-way brake shown in Fig. 7; and
Fig. 10 is a section taken along the line 10-10 of Fig. 9.

### DESCRIPTION OF THE PREFERRED EMBODIMENT

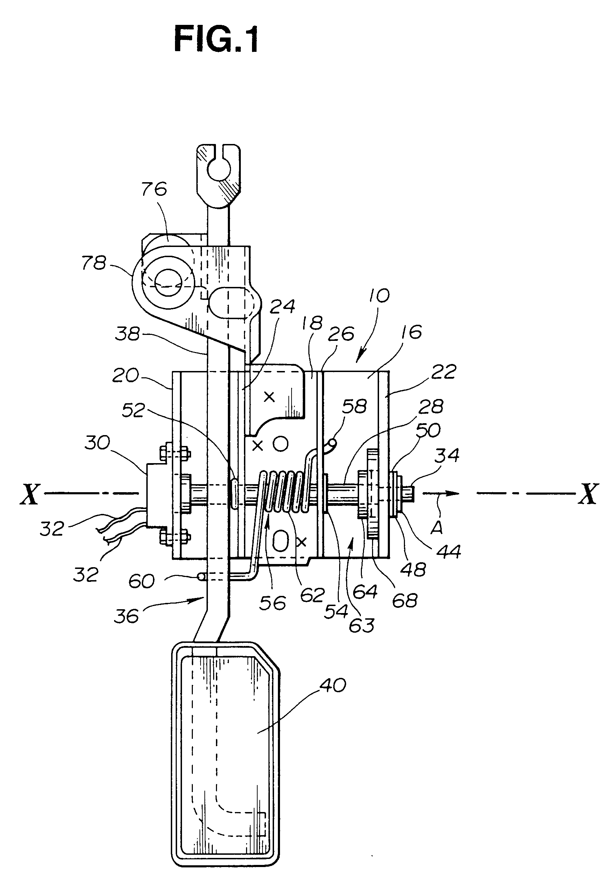

Referring now to Fig. 1, the first embodiment of an electrically controlled accelerator pedal arrangement for a vehicle, according to the invention is described.

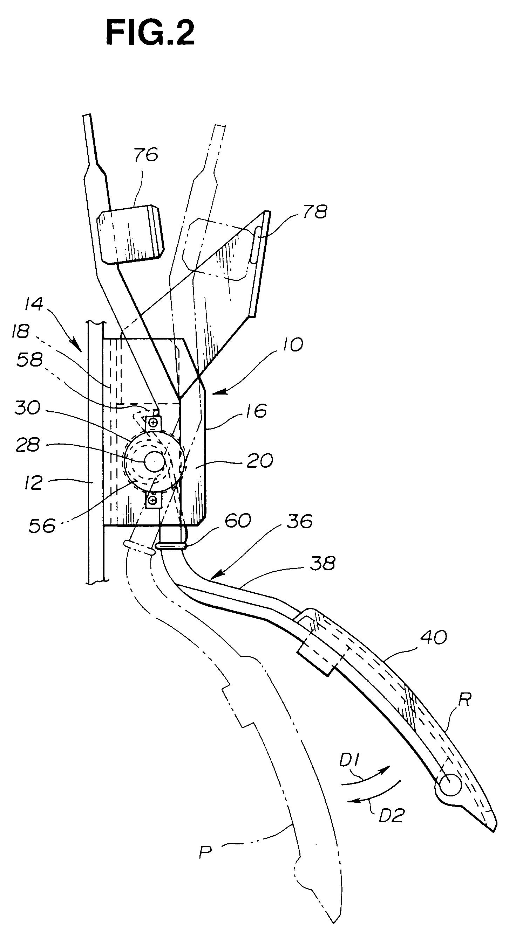

As illustrated in Fig. 1, the electrically controlled accelerator pedal arrangement comprises a bracket 10 secured to a dash panel 12 of a vehicle body 14. The bracket 10 includes a first channel-shaped member 16 and a second channel-shaped member 18 secured to the first channel-shaped member 16. The first channel-shaped member 16 has two spaced walls 20 and 22 opposed to each other and the second channel-shaped member 18 has two spaced walls 24 and 26 opposed to each other. The first channel-shaped member 16 has a greater distance between the opposed walls 20 and 22 than a distance between the opposed walls 24 and 26 of the second channel-shaped member 18. A shaft 28 has an axis X and is supported by the walls 20 and 22 of the first channel-shaped member 16 and the walls 24 and 26 of the second channel-shaped member 18 for rotation about the axis X. The shaft 28 has one end received in a throttle sensor 30 secured to the wall 20 of the first channel-shaped member 16. The throttle sensor 30 is adapted to receive the one end of the shaft 28 and disposed in concentrical relation to the shaft 28. The throttle sensor 30 is connected via lead wires 32 to a throttle valve control mechanism (not shown). The throttle sensor 30 detects an accelerator pedal position and generates an output signal indicative of the accelerator pedal position in response to the rotating movement of the shaft 28 around the axis X. The shaft 28 has the other end projecting outward from through the wall 22 of the first channel-shaped member 16. An accelerator pedal 36 is connected to the shaft 28 for unitary rotation therewith about the axis X. The accelerator pedal 36 includes a pedal arm 38 connected to the shaft 28 and a pedal pad 40 attached to a lower end, as viewed in Fig. 1, of the pedal arm 38. A return spring 56 is mounted on the shaft 28. The return spring 56 has one end 58 engaged with the wall 26 of the second channel-shaped member 18 and the other end 60 engaged with the pedal arm 38 of the accelerator pedal 36. The return spring 56 includes a coiled portion 62 wound around a middle portion of the shaft 28 which is interposed between the walls 24 and 26 of the second channel-shaped member 18. The return spring 56 biases the accelerator pedal 36 in a first rotational direction D1 toward a released position R as indicated in Fig. 2. The accelerator pedal 36 is movable from the released position R toward a depressed position P in the opposite second rotational direction D2 as illustrated in Fig. 2.

Referring back to Fig. 1, the shaft 28 is formed with an annular flange 52. The annular flange 52 contacts an outside face of the wall 24 of the second channel-shaped member 18 to limit an axial movement of the shaft 28 in the direction A. An E-shaped retainer 54 is so arranged on the shaft 28 as to contact an outside face of the wall 26 of the second channel-shaped member 18. The E-shaped retainer 54 restricts an axial movement of the shaft 28 in a reverse direction to the direction A.

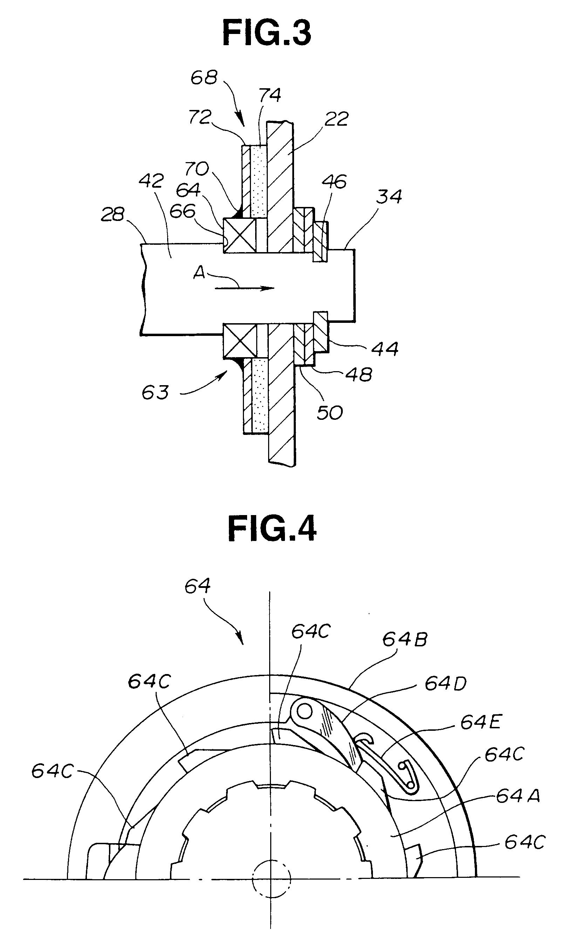

As shown in Figs. 1 and 3, there is provided a brake operative to resist rotational movement of the accelerator pedal 36. The brake is in the form of a one-way brake 63 which is operative to resist movement of the accelerator pedal 36 in the first rotational direction D1 of Fig. 2, but allowing free movement of the accelerator pedal 36 in the opposite second rotational direction D2 of Fig. 2 against the return spring 56. The brake 63 includes a one-way clutch 64 mounted on a reduced diameter section 34 formed on the shaft 28. As best shown in Fig. 3, the reduced diameter section 34 has a diameter smaller than a predetermined diameter of a body section 42 of the shaft 28 to form a shoulder 66 disposed therebetween. The shoulder 66 abuts against the one-way clutch 64. The one-way clutch 64 may be of a known ratchet type as illustrated in Fig. 4. As shown in Fig. 4, the one-way clutch 64 of the ratchet type includes an inner race 64A formed with gears 64c and an outer race 64B formed with a pawl 64D. The pawl 64D is biased by a leaf spring 64E toward an outer periphery of the inner race 64A. A relative rotational motion of the inner race 64A and the outer race 64B is prevented in one direction by engagement between the gear 64C and the pawl 64D.

Referring to Figs. 3 and 4, the inner race 64A is fixed to the shaft 28 for unitary rotation therewith. The brake 63 includes a friction disk 68 secured to the outer race 64B of the one-way clutch 64 at a welded portion 70, and the wall 22 of the first channel-shaped member 16. The friction disk 68 includes a base plate 72 and a friction pad 74 attached to the base plate 72. An E-shaped retainer 44 is fit in an annular groove 46 formed on the reduced diameter section 34 of the shaft 28. A plain washer 48 is disposed axially adjacent the E-shaped retainer 44 on the reduced diameter section 34 and a spring washer 50 is interposed between the plain washer 48 and an outside face of the wall 22. The spring washer 50 biases the shaft 28 in a direction as indicated by the arrow A of Fig. 3. Thus, the shoulder 66, the E-shaped retainer 44, the plain washer 48, and the spring washer 50 cooperate to bias the friction disk 68 into frictional engagement with the wall 22 of the first channel-shaped member 16.

Reference numerals 76 and 78 indicated in Figs. 1 and 2, denotes a kick-down switch secured to the pedal arm 40 and a contacting plate secured to the wall 24 of the second channel-shaped member 18 of the bracket 10, respectively. The kick-down switch 76 contacts the contacting plate 78 when the accelerator pedal 36 is placed at the depressed position P, and generates an ON signal which is transmitted to a control unit (not shown).

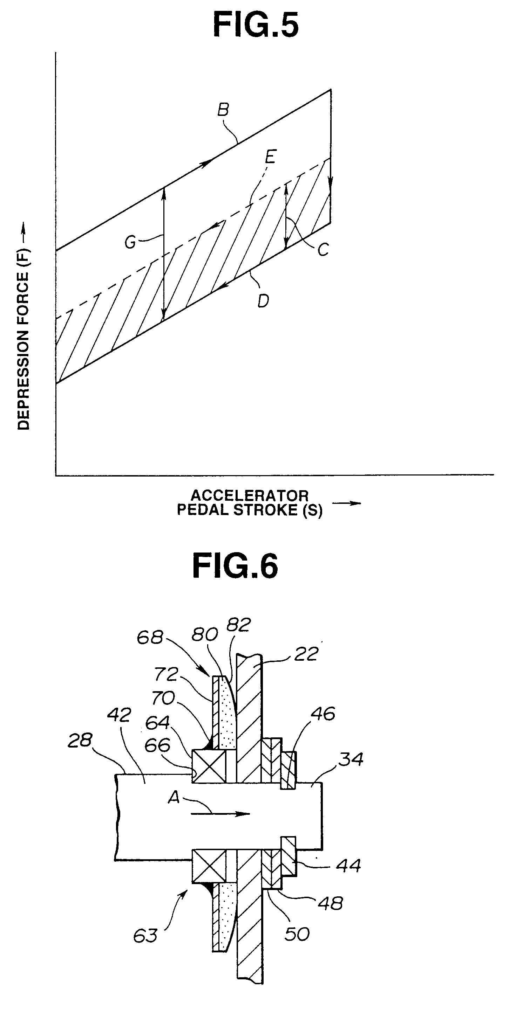

When a depression force is applied to the pedal pad 40 such that the accelerator pedal 36 moves from the released position R toward the depressed position P, the inner race 64A of the one-way clutch 64 rotates together with the shaft 28 in the second rotational direction D2 indicated in Fig. 2 and the outer race 64B thereof remains unrotated due to a frictional engagement between the friction disk 68 and the inside face of the wall 22 of the first channel-shaped member 16. Thus, the one-way brake 63 allows the free movement of the accelerator pedal 36 in the second rotational direction D2 of Fig. 2, against the return spring 56. In this condition, there is caused no damping of the biasing force of the return spring 56. As shown in Fig. 5, the depression force F as indicated by the line B, increases as the stroke S of the accelerator pedal 36 varies during the shifting movement from the released position R into the depressed position P.

When the depression force applied to the pedal pad 40 decreases such that the accelerator pedal 36 moves toward the released position R, the inner and outer races 64A and 64B of the one-way clutch 64 make a unitary rotation with the shaft 28 by the engagement of the gear 64C and the pawl 64D. During the unitary rotation, the frictional engagement between the friction disk 68 and the inside face of the wall 22 of the first channel-shaped member 16 is caused. Thus, the one-way brake 63 operates to resist the movement of the accelerator pedal in the first rotational direction D1 of Fig. 2. The operation of the one-way brake 63 causes damping the biasing force of the return spring 56. This results in a reduction of the depression force required for holding the accelerator pedal 36 at a desirable position during the shifting of the accelerator pedal 36, upon which the accelerator pedal 36 is biased by the return spring 56 toward the released position R. As illustrated in Fig. 5, during the movement of the accelerator pedal 36 toward the released position R, the required depression force is reduced as indicated by the full line D, by an amount C, as compared with the depression force indicated by the broken line E, which is required if the accelerator pedal 36 is free from the resistance caused by the one-way brake 63. There is a difference G between the the depression force B required during the movement of the accelerator pedal 36 in the second rotational direction D2 and the reduced depression force D required during the movement of the accelerator pedal 36 in the first rotational direction D1 toward the released position R. The reduced depression force D is substantially equivalent to the depression force required in the conventional accelerator pedal arrangement of mechanically controlled type when the accelerator pedal moves from the depressed position to the released position. The reduction of the depression force caused during the movement of the accelerator pedal 36 in the first rotational direction D1 toward the released position R serves for improving an operating performance of the accelerator pedal arrangement.

Fig. 6 shows a modified friction pad 80 of the friction disk 68, which differs from the aforementioned friction pad 74 in provision of a rounded surface 82 engaging the inside face of the wall 22 of the first channeled-member 16. Like numerals denote like parts of the preferred embodiment described above, and therefore detailed explanations therefor are omitted. The rounded surface 82 of the friction pad 80 serves for keeping the frictional engagement with the inside face of the wall 22 of the first channel-shaped member 16 even in a case where the friction pad 80 is worn in a period of use.

The throttle sensor 30, the return spring 56, the one-way bearing 64 and the friction disk 68 are disposed in concentrical relation to the shaft 28 in the electrically controlled accelerator pedal arrangement according to the present invention. This serves for providing the electrically controlled accelerator pedal arrangement with a simple structure and suitable for easy assembly, leading to a reduction in size.

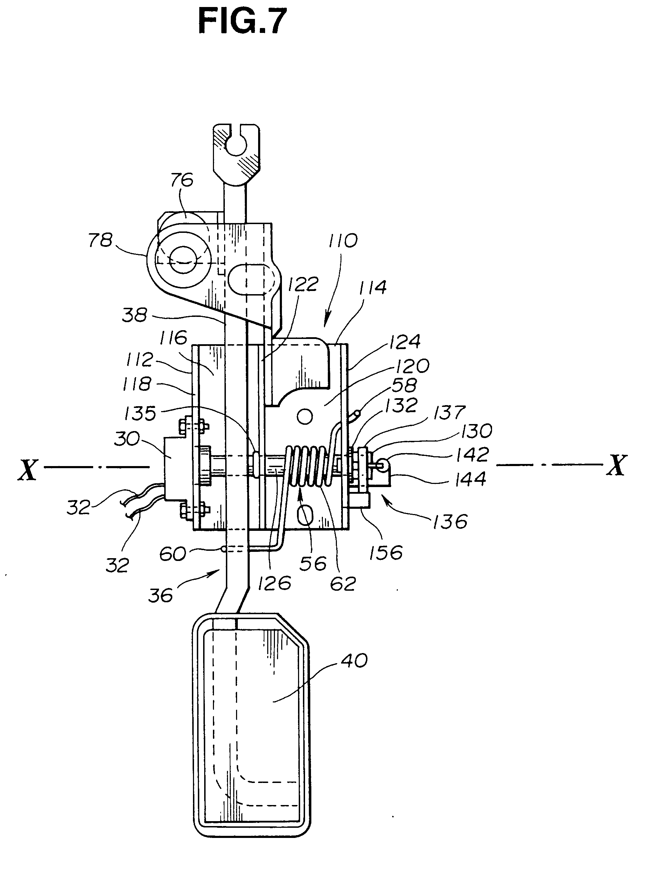

Referring now to Figs. 7-10, the second embodiment of an electrically controlled accelerator pedal arrangement for a vehicle, according to the present invention is described. The second embodiment includes some parts similar to parts used in the aforementioned first embodiment. Accordingly, in Figs. 7-10, like numerals denote like parts and detailed explanations therefor are omitted.

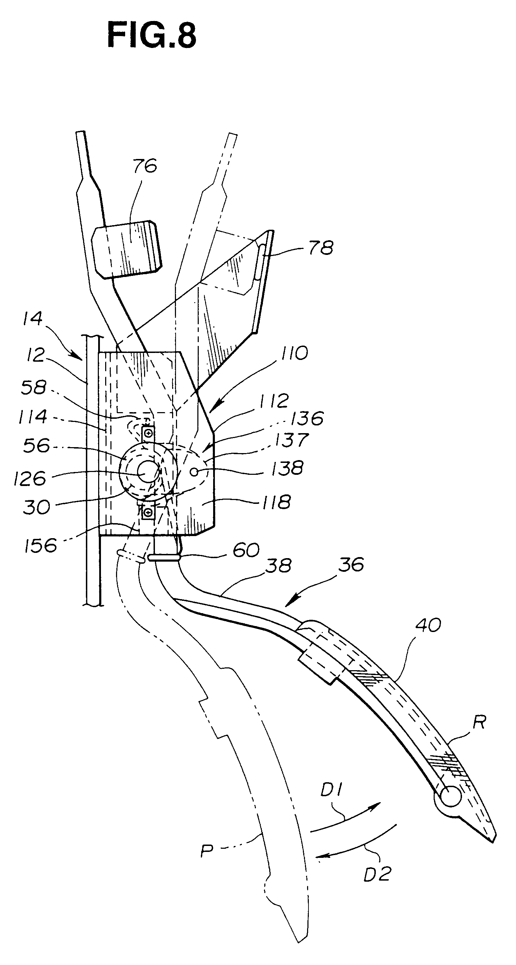

As illustrated in Fig. 8, the second embodiment of the electrically controlled accelerator pedal arrangement comprises a bracket 110 secured to the dash panel 12 of the vehicle body 14. The bracket 110 includes a first L-shaped member 112 and a second channel-shaped member 114 secured to the first L-shaped member 112, as seen from Figs. 7 and 8. The first L-shaped member 112 has a bottom wall 116 and an upright wall 118 extending from the bottom wall 116 and the second channel-shaped member 114 has a bottom wall 120 and two spaced walls 122 and 124 extending upright from the bottom wall 120 and opposed to each other. A shaft 126 has an axis X and is supported by the wall 118 of the first L-shaped member 112 and the walls 122 and 124 of the second channel-shaped member 114 for rotation about the axis X. The bottom wall 116 of the first L-shaped member 112 has a greater length in a direction of the axis X than the bottom wall 120 of the second channel-shaped member 114. The shaft 126 has one end received in the throttle sensor 36 secured to the upright wall 118 of the first L-shaped member 112. The shaft 126 has the other end which is supported by the wall 124 of the second channel-shaped member 114 and projects outward therefrom. The accelerator pedal 36 is connected to the shaft 126 for unitary rotation therewith about the axis X. Similar to the first embodiment, the accelerator pedal 36 is biased by the return spring 56 in the first rotational direction D1 toward the released position R as illustrated in Fig. 8. As shown in Fig. 7, the return spring 56 has one end 58 engaged with the wall 124 of the second channel-shaped member 114 and the other end 60 engaged with the pedal arm 38 of the accelerator pedal 36. The coiled portion 60 of the return spring 56 is wound around a portion of the shaft 126 disposed between the walls 122 and 124 of the second channel-shaped member 114.

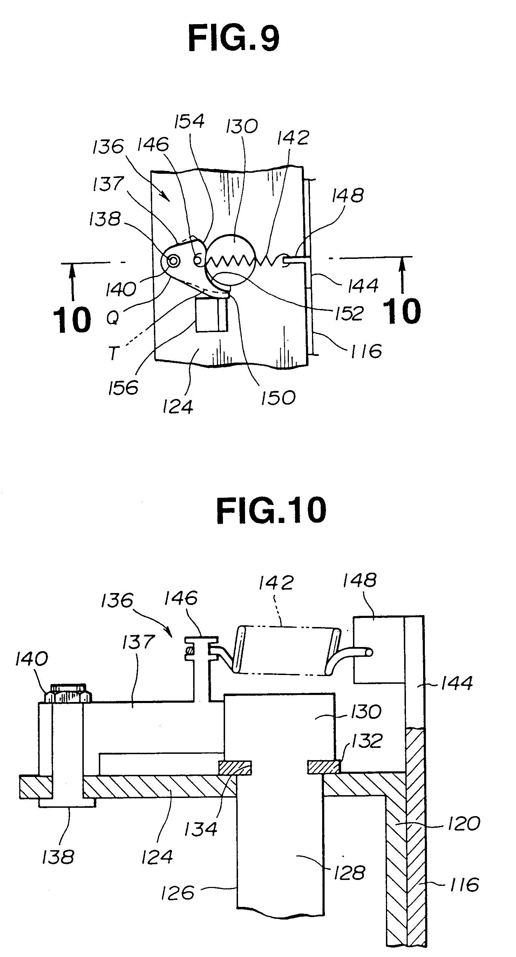

As best shown in Fig. 10, the shaft 126 includes a body section 128 having a predetermined diameter and an increased diameter section 130 having a diameter greater than the predetermined diameter of the body section 128. The increased diameter section 130 is disposed at the outward projecting end of the shaft 126 from the wall 124. An E-shaped retainer 132 is fit in an annular groove 134 formed on the increased diameter section 130 of the shaft 126. The E-shaped retainer 132 is in contact with an outside face of the wall 124 of the second channel-shaped member 114. An annular flange 135 is disposed on the shaft 126 and is in contact with an outside face of the wall 122 of the second channel-shaped member 114. The E-shaped retainer 132 and the annular flange 135 of the shaft 126 cooperate to prevent inward and outward axial movement of the shaft 126.

As illustrated in Figs. 7-10, there is provided a brake operative to resist the rotational movement of the accelerator pedal 36. The brake is in the form of a one-way brake 136 operative to resist movement of the accelerator pedal 36 in the first rotational direction D1 of Fig. 8, but allowing free movement of the accelerator pedal 36 in the opposite second rotational direction D2 of Fig. 8 against the return spring 56. As best shown in Figs. 9 and 10, the one-way brake 136 includes the shaft 126, and includes, in order to restrain the rotational movement of the shaft 126, a pivot member 137 pivotally supported by the wall 124 of the second channel-shaped member 114, a spring 142 biasing the pivot member 137 into frictional engagement with the shaft 126, and a stop 156 arranged to abut the pivot member 137 to prevent the pivot member 137 from following the rotational movement of the shaft 126 during the movement of the accelerator pedal 36 in the first rotational direction D1. Specifically explained, the pivot member 137 is pivotally supported on an outside face of the wall 124 by means of a pin 138 and a nut 140. The pivot member 137 is so configured as to be in an increased frictional engagement relation to the shaft 126 during the movement of the accelerator pedal 36 in the first rotational direction D1, and in a reduced frictional engagement relation thereto during the movement of the accelerator pedal 36 in the second rotational direction D2. For example, the pivot member 137 is of a generally triangular shape having a peripheral surface including an increased area 152 firmly engaging a peripheral surface of the increased diameter section 130 of the shaft 126 during the movement of the accelerator pedal 36 in the first rotational direction D1, and a reduced area 154 engaging approximately tangentially the peripheral surface of the increased diameter section 130 of the shaft 126 during the movement of the accelerator pedal 36 in the second rotational direction D2. The pivot member 137 has a first pivot position Q as indicated in Fig. 9, wherein the pivot member 137 is in the reduced frictional engagement relation to the shaft 126 and a second pivot position T as indicated in Fig. 9, wherein the pivot member 137 is in the increased frictional engagement relation to the shaft 126. The spring 142 has one end supported on a spring bearing rod 146 extending outward from an end face of the pivot member 137. The spring 142 has the other end supported on a spring bearing tab 148 extending upright from a tongue portion 144 which projects outward from the bottom wall 116 of the first L-shaped member 112. The stop 156 is disposed on the outside face of the wall 124 of the second channel-shaped member 114. The stop 156 abuts an arm portion 150 with which the pivot member 137 is integrally formed, when the pivot member 137 is moved to the first pivot position Q.

When a depression force is applied to the pedal pad 40 such that the accelerator pedal 36 moves in the rotational direction D2 toward the depressed position P, the pivot member 137 follows the rotational movement of the shaft 126 to move pivotally about the pin 138 toward the first pivot position Q of Fig. 9. The pivot member 137 is prevented from the pivotal movement by abutting engagement of the arm portion 150 with the stop 156 and placed at the first pivot position Q. The reduced area 154 of the peripheral surface of the pivot member 137 contacts approximately tangentially the peripheral surface of the increased diameter section 130 of the shaft 126. Thus, owing to the reduced frictional engagement relation between the pivot member 137 and the shaft 126, the one-way brake 136 allows the free movement of the accelerator pedal 36 in the second rotational direction D2 of Fig. 8 against the return spring 56.

When the depression force applied to the pedal pad 40 decreases such that the accelerator pedal 36 moves in the first rotational direction D1 toward the released position R, the pivot member 137 follows the rotational movement of the shaft 126 to move pivotally about the pin 138 toward the second pivot position T of Fig. 9 and the arm portion 150 disengages from the stop 156. At the second pivot position T of the pivot member 137, the increased area 152 of the peripheral surface of the pivot member 137 frictionally engages the peripheral surface of the increased diameter section 130 of the shaft 126. The increased frictional engagement between the pivot member 137 and the shaft 126 causes damping of the biasing force of the return spring 56. Thus, the one-way brake 136 operates to resist the movement of the accelerator pedal 36 in the first rotational direction D1. This results in a reduction of the depression force required for holding the accelerator pedal 36 at a desirable position.

In the second embodiment, there is obtained the same relation as in the first embodiment between the depression force F and the stroke S of the accelerator pedal 36. Therefore, the second embodiment serves for improving an operating performance as well as the first embodiment.

## Claims

1. An accelerator pedal arrangement comprising:
a stationary member (10, 110);
a shaft (28, 126) having an axis (X), said shaft (28, 126) being supported by said stationary member (10, 110) for rotation about said axis (X);
an accelerator pedal (36) connected to said shaft (28, 126) for unitary rotation therewith about said axis (X);
a return spring (56) biasing said accelerator pedal (36) in a first rotational direction toward a released position (R); and
a brake operative to resist rotational movement of said accelerator pedal (36);
**CHARACTERIZED IN THAT** said brake is in the form of a one-way brake (63, 136) which is operative to resist movement of said accelerator pedal (36) in said first rotational direction, but allowing free movement of said accelerator pedal (36) in the opposite second rotational direction against said return spring (56).

2. An accelerator pedal arrangement as claimed in claim 1, CHARACTERIZED IN THAT said brake includes a one-way clutch (64) mounted on said shaft (28).

3. An accelerator pedal arrangement as claimed in claim 2, CHARACTERIZED IN THAT said brake includes a friction disk (68) secured to said one-way clutch (64), and a wall (22) fixed to said stationary member (10), said friction disk (68) including a base plate (72) and a friction pad (74) attached to the base plate (72).

4. An accelerator pedal arrangement as claimed in claim 3, CHARACTERIZED IN THAT said brake includes means (66, 44, 48, 50) for biasing said friction disk into frictional engagement with said wall (22).

5. An accelerator pedal arrangement as claimed in claim 4, CHARACTERIZED IN THAT said biasing means includes a shoulder (66) with which said shaft (28) is formed, said shoulder (66) abutting against said one-way clutch (64).

6. An accelerator pedal arrangement as claimed in claim 3, CHARACTERIZED IN THAT said friction pad (74) has a rounded surface (82).

7. An accelerator pedal arrangement as claimed in claim 1, CHARACTERIZED IN THAT said brake includes said shaft (126) and means for restraining rotational movement of said shaft (126).

8. An accelerator pedal arrangement as claimed in claim 7, CHARACTERIZED IN THAT said preventing means includes a pivot member (137) pivotally supported by said stationary member (110), a spring (142) biasing said pivot member (137) into frictional engagement with said shaft (126), and a stop (156) arranged to abut said pivot member (137) to prevent said pivot member (137) from following the rotational movement of said shaft (126) during the movement of said accelerator pedal (36) in said second rotational direction.

9. An accelerator pedal arrangement as claimed in claim 8, CHARACTERIZED IN THAT said pivot member (137) has an arm portion (150) engageable with said stop (156).

10. An accelerator pedal arrangement as claimed in claim 9, CHARACTERIZED IN THAT said pivot member (137) is so configured as to be in an increased frictional engagement relation to said shaft (126) during the movement of said accelerator pedal (36) in said first rotational direction, and in a reduced frictional engagement relation thereto during the movement of said accelerator pedal (36) in said second rotational direction.

## Patentansprüche

1. Gaspedalanordnung mit:
einem stationären Element (10, 110);
einer Welle (28, 126) mit einer Achse (X), wobei die Welle (28, 126) von dem stationären Element (10, 110) um die Achse (X) drehbar gelagert wird;
ein Gaspedal (36), das mit der Welle (28, 126) verbunden ist und sich mit ihr zusammen um die Achse (X) dreht;
eine Rückstellfeder (56), die das Gaspedal (36) in eine erste Drehrichtung auf eine gelöste Position (R) zu vorspannt; und
eine Bremse, die der Drehbewegung des Gaspedals (36) Widerstand entgegensetzt;
**dadurch gekennzeichnet**, daß die Bremse die Form einer Einwegbremse (63, 136) hat, die die Bewegung des Gaspedals (36) in der ersten Drehrichtung Widerstand entgegensetzt, jedoch eine ungehinderte Bewegung des Gaspedals (36) in der entgegengesetzten zweiten Drehrichtung entgegen der Rückstellfeder (56) ermöglicht.

2. Gaspedalanordnung nach Anspruch 1, **dadurch gekennzeichnet**, daß die Bremse eine Freilaufkupplung (64) enthält, die an der Welle (28) angebracht ist.

3. Gaspedalanordnung nach Anspruch 2, **dadurch gekennzeichnet**, daß die Bremse eine Reibscheibe (68) enthält, die an der Freilaufkupplung (64) angebracht ist, sowie eine Wand (22), die an dem stationären Element (10) befestigt ist, wobei die Reibscheibe (68) eine Grundplatte (72) sowie eine Reibauflage (74) enthält, die mit der Grundplatte (72) verbunden ist.

4. Gaspedalanordnung nach Anspruch 3, **dadurch gekennzeichnet**, daß die Bremse eine Einrichtung (66,44,48,50) enthält, die die Reibscheibe in Reibungskontakt mit der Wand (22) drückt.

5. Gaspedalanordnung nach Anspruch 4, **dadurch gekennzeichnet**, daß die Vorspanneinrichtung eine Schulter (66) enthält, mit der die Welle (28) versehen ist, wobei die Schulter (66) an der Freilaufkupplung (64) anliegt.

6. Gaspedalanordnung nach Anspruch 3, **dadurch gekennzeichnet**, daß die Reibauflage (74) eine abgerundete Oberfläche (82) hat.

7. Gaspedalanordnung nach Anspruch 1, **dadurch gekennzeichnet**, daß die Bremse die Welle (126) sowie eine Einrichtung zum Einschränken der Drehbewegung der Welle (126) enthält.

8. Gaspedalanordnung nach Anspruch 7, **dadurch gekennzeichnet**, daß die Verhinderungseinrichtung ein Schwenkelement (137) enthält, das schwenkbar durch das stationäre Element (110) gelagert wird, eine Feder (142), die das Schwenkelement (137) in Reibungskontakt mit der Welle (126) drückt, sowie einen Anschlag (156), der an dem Schwenkelement (137) anschlägt, um zu verhindern, daß das Schwenkelement (137) der Drehbewegung der Welle (126) während der Bewegung des Gaspedals (36) in der zweiten Drehrichtung folgt.

9. Gaspedalanordnung nach Anspruch 8, **dadurch gekennzeichnet**, daß das Schwenkelement (137) einen Armabschnitt (150) aufweist, der mit dem Anschlag (156) in Kontakt gebracht werden kann.

10. Gaspedalanordnung nach Anspruch 9, **dadurch gekennzeichnet**, daß das Schwenkelement (137) so aufgebaut ist, daß es während der Bewegung des Gaspedals (36) in der ersten Drehrichtung in verstärkter Reibungskontaktbeziehung mit der Welle (126) ist, und während der Bewegung des Gaspedals (36) in der Zweiten Drehrichtung in verringerter Reibungskontaktbeziehung mit dieser ist.

## Revendications

1. Agencement de pédale d' accélérateur comportant:
un élément stationnaire (10, 110);
un arbre (28, 126) ayant un axe (X), ledit arbre (28), 126) étant supporté par ledit élément stationnaire (10, 110) pour la rotation autour dudit axe (X) ;
une pédale d' accélérateur (36) reliée audit arbre (28), 126) en vue d'une rotation uni taire avec celui-ci autour dudit axe (X);
un ressort de rappel (56) sollicitant ladite pédale d'accélérateur (36) dans une première direction de rotation vers une position relâchée (R) ; et
un frein intervenant pour résister à un mouvement de rotation de ladite pédale d'accélérateur (36);
caractérisé en ce que ledit frein se présente sous forme de frein à une voie (63, 136) qui intervient pour résister à un mouvement de ladite pédale d'accélérateur (36) dans ladite première direction de rotation mais qui permet un libre mouvement de ladite pédale d'accélérateur (36) dans la deuxième direction de rotation opposée contre ledit ressort de rappel (56).

2. Agencement de pédale d'accélérateur selon la revendication 1, caractérisé en ce que ledit frein comprend un embrayage à roue libre (64) monté sur ledit arbre (28).

3. Agencement de pédale d'accélérateur selon la revendication 2, caractérisé en ce que ledit frein comporte un disque de friction (68) fixé audit embrayage à roue libre (64) et une paroi (22) fixée audit élément stationnaire (10), ledit disque de friction (68) incluant une plaque de base (72) et une plaquette de friction (74) fixée à la plaque de base (72).

4. Agencement de pédale d'accélérateur selon la revendication 3, caractérisé en ce que ledit frein comporte des moyens (66 , 44, 48, 50) pour solliciter ledit disque de friction en prise de friction avec ladite paroi (22).

5. Agencement de pédale d'accélérateur selon la revendication 4, caractérisé en ce que ledit moyen de sollicitation comporte un épaulement (66) avec lequel ledit arbre (28) est formé, ledit épaulement (66) butant contre ledit embrayage à roue libre (64).

6. Agencement de pédale d'accélérateur selon la revendication 3, caractérisé en ce que ladite plaquette de friction (74) a une surface arrondie (82).

7. Agencement de pédale d'accélérateur selon la revendication 1, caractérisé en ce que ledit frein comporte ledit arbre (126) et un moyen pour limiter le mouvement de rotation dudit arbre (126).

8. Agencement de pédale d'accélérateur selon la revendication 7, caractérisé en ce que ledit moyen d'empêchement comporte un élément de pivot (137) supporté de manière pivotante par ledit élément stationnaire (110), un ressort (142) sollicitant ledit élément de pivot (137) en prise de friction avec ledit arbre (126), et une butée d'arrêt (156) agencée pour buter contre ledit élément de pivot (137) pour empêcher que ledit élément de pivot (137) suive le mouvement de rotation dudit arbre (126) pendant le mouvement de ladite pédale d'accélérateur (36) dans ladite deuxième direction de rotation.

9. Agencement de pédale d'accélérateur selon la revendication 8, caractérisé en ce que ledit élément de pivot (137) a une portion de bras (150) pouvant être mise en prise avec ladite butée d'arrêt (156).

10. Agencement de pédale d'accélérateur selon la revendication 9, caractérisé en ce que ledit élément de pivot (137) est configuré de façon à être en une relation de plus grande prise par friction avec ledit arbre (126) pendant le mouvement de ladite pédale d'accélérateur (36) dans ladite première direction de rotation, et en une relation de plus petite prise par friction avec celui-ci pendant le mouvement de ladite pédale d'accélérateur (36) dans ladite deuxième direction de rotation.
